(19) Europäisches Patentamt
European Patent Office
Office européen des brevets

(11) Publication number: **0 460 698 A2**

(12) **EUROPEAN PATENT APPLICATION**

(21) Application number: **91109357.3**

(22) Date of filing: **07.06.91**

(51) Int. Cl.5: **C08L 83/07**, C08L 83/06, C08L 83/08, C08K 9/10

(30) Priority: **08.06.90 JP 151152/90**

(43) Date of publication of application: **11.12.91 Bulletin 91/50**

(84) Designated Contracting States: **BE DE FR GB**

(71) Applicant: **DOW CORNING TORAY SILICONE COMPANY, LIMITED**
**Mitsui Building No. 6,**
**2-3-16,Nihonbashi-Muromachi**
**Chuo-ku Tokyo 103(JP)**

(72) Inventor: **Togashi, Atsushi**
**6, 1-chome, Yushudai Nishi**
**Ichihara-shi, Chiba(JP)**
Inventor: **Kasuya, Akira**
**6, 1-chome, Yushudai Nishi**
**Ichihara-shi, Chiba Prefecture(JP)**

(74) Representative: **Spott, Gottfried, Dr.**
**Spott Weinmiller & Partner**
**Sendlinger-Tor-Platz 11**
**W-8000 München 2(DE)**

(54) **Curable organosiloxane composition exhibiting improved adhesion.**

(57) The presence of an organohydrogenpolysiloxane containing at least one epoxy-substituted organic group substantially improves the adhesion developed during curing of organosiloxane compositions curable by a platinum catalyzed hydrosilylation reaction when the curing catalyst is microencapsulated within particles of a thermoplastic resin. The adhesion is further improved by the presence of an organohydrogenpolysiloxane containing at least one silicon-bonded alkoxysilylalkyl group per molecule.

EP 0 460 698 A2

This invention relates to organosiloxane compositions curable by a platinum-catalyzed hydrosilylation reaction. More particularly, this invention relates to this type of organosiloxane composition that exhibits excellent long-term storage stability and develops adhesion during curing to a variety of both organic and inorganic substrates, including metals, glass and plastics.

Organopolysiloxane compositions which cure by the hydrosilylation reaction cure rapidly in deep sections without developing by-products, and are therefore used in a broad range of applications, for example, as adhesives, as potting materials and as coating materials for electronic and electrical components, and as release coatings for papers and films.

One disadvantage of this type of organopolysiloxane composition is very poor storage stability. The compositions typically cannot be stored within a single sealed container. As a consequence, these compositions must generally be stored with the organohydrogenpolysiloxane and platinum-containing curing catalyst in different containers. One technique that has been developed to overcome this drawback has been the encapsulation of the catalyst in particles of an organic or organosilicon resin.

Another problem associated with this type of organopolysiloxane composition is its inferior adhesiveness for other materials. When a poorly adhesive organopolysiloxane composition is used as a potting or coating material for electrical or electronic components, delamination or exfoliation is prone to occur, and this permits the infiltration of moisture and causes a decline in the adhesive strength.

Numerous additives have been proposed for improving the adhesion of organosiloxane compositions curable by a platinum-catalyzed hydrosilylation reaction. However, the resulting organopolysiloxane compositions are not entirely satisfactory. In some instances the organosilane or organopolysiloxane added as an adhesion promoter is volatilized during curing, which prevents the development of a satisfactory adhesion. When the level of adhesion promoter is increased to compensate for this loss, the properties of the cured product are compromised.

When these adhesion promoters are present in a curable composition wherein the hydrosilylation reaction catalyst is isolated from the other ingredients by encapsulation in a thermoplastic resin as described hereinbefore, a satisfactory storage stability at room temperature for the single package form may still remain elusive because the organosilane or organopolysiloxane used as an adhesion promoter may swell or dissolve the thermoplastic resin, thereby releasing the catalyst and resulting in premature curing of the composition.

The present inventors carried out extensive research directed at solving the aforementioned shortcomings of organosiloxane compositions curable by a platinum-catalyzed hydrosilylation reaction, and discovered that the problems could be solved in a single stroke through the use of a special thermoplastic resin microparticulate as the curing catalyst in combination with the use of an epoxy-substituted organohydrogenpolysiloxane as the curing agent.

One objective of the present invention is the introduction of a thermosetting organopolysiloxane composition which has an excellent storage stability in the vicinity of room temperature and which develops an excellent adhesion for various types of substrates, including metals, glasses, and plastics.

The present invention relates to an improved curable organosiloxane composition comprising

100 weight parts of an organopolysiloxane containing at least two silicon-bonded alkenyl radicals in each molecule, and represented by the average unit formula

$$R_aSiO_{(4-a)/2}$$

where R represents a monovalent hydrocarbon or halogenated hydrocarbon radical, and the value of a is from 1.0 to 2.3,

at least one organohydrogenpolysiloxane containing at least three silicon-bonded hydrogen atoms per molecule in an amount sufficient to cure said composition, and

from 0.005 to 100 weight parts of a microparticulate thermoplastic resin containing at least 0.01 weight % of a hydrosilylation catalyst, where the thermoplastic resin exhibits a softening point of 50 to 200° C., and the average particle size of said resin is from 0.01 to 100 micrometers.

The improvement that characterizes the present compositions comprises the presence of from 0.1 to 20 weight parts of a first organohydrogenpolysiloxane containing at least 1 epoxy substituted organic radical and the presence of from 0 to 20 weight parts of a second organohydrogenpolysiloxane containing at least 1 silicon-bonded alkoxysilylalkyl group.

The ingredients of the present compositions will now be explained in detail.

The organopolysiloxane referred to as ingredient A of the present compositions is the principal or base ingredient of these compositions. This ingredient must contain at least two silicon-bonded alkenyl groups in

each molecule. The substituent represented by R in the foregoing formula for this ingredient is a monovalent hydrocarbon or halogenated radical exemplified by but not limited to alkyl radicals such as methyl, ethyl, propyl, butyl, hexyl, and octyl; alkenyl radicals such as vinyl, allyl, and hexenyl; aryl radicals such as phenyl; and halogenated hydrocarbon radicals such as 3,3,3-trifluoropropyl. The value of a in the preceding formula should be from 1.0 to 2.3.

Ingredient A should have a molecular structure corresponding to a straight-chain or branched siloxane framework. While no specific restriction is placed on the degree of polymerization of this ingredient, the organopolysiloxane generally exhibits a viscosity at 25°C. within the range of 10 to 1,000,000 centipoise.

Ingredient B of the present compositions is not only a crosslinker for the organopolysiloxane referred to as ingredient A, but is also the essential ingredient for developing an excellent adhesion to other materials. Ingredient B contains in each molecule at least 1 epoxy substituted organic group and at least 3 silicon-bonded hydrogen atoms. Each molecule of ingredient B must contain at least one epoxy substituted organic group in order for the present compositions to develop adhesion during curing.

It is also essential that each molecule of ingredient B contain at least 3 silicon-bonded hydrogen atoms in order for the present compositions to form a network structure during curing.

Other than the aforementioned epoxy-substituted organic groups, the silicon-bonded organic groups in ingredient B are selected from the same group of monovalent hydrocarbon and halogenated hydrocarbon radicals represented by R in the average unit formula of ingredient A of the present compositions. One or more types of these hydrocarbon radicals can be present in the molecules of ingredient B.

When it is critical that the curing reaction proceed to a thorough completion, it will be advantageous for each molecule of ingredient B to contain an average of at least 4 silicon-bonded hydrogen atoms.

Ingredient B is exemplified by but not limited to the following compounds:

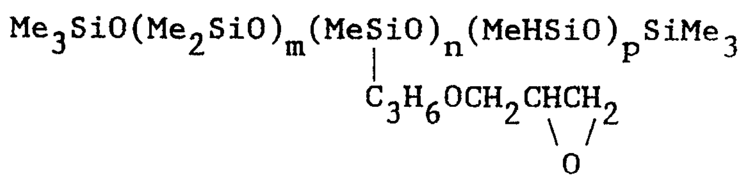

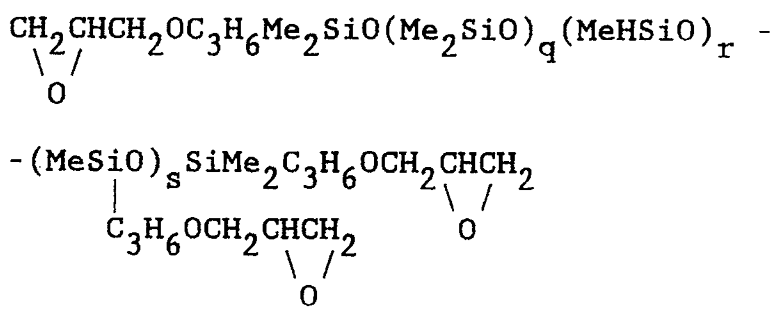

and

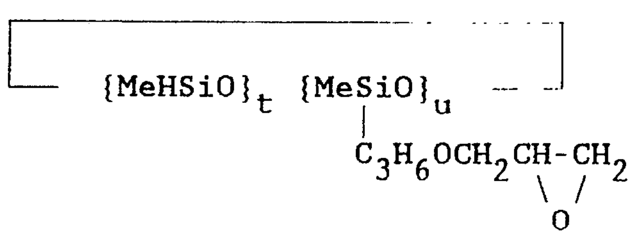

where m and n are integers with values of at least 1, p is an integer with a value of at least 3, q and s are integers with values of at least 1, r is an integer with a value of at least 3, t is an integer with a value of at least 3 and the sum of t and u is from 4 to 6.

Ingredient B can be readily prepared, for example, by the reaction of an epoxy compound containing an alkenyl radical with a portion of the silicon-bonded hydrogen atoms of a methylhydrogenpolysiloxanes in the presence of a hydrosilylation catalyst. The organohydrogenpolysiloxanes are well known curing agents for organosiloxane compositions that cure by a hydrosilylation reaction. At least 3 silicon-bonded hydrogen

atoms of the organohydrogenpolysiloxane should remain unreacted.

Examples of alkenyl radical substituted epoxy compounds are allyl glycidyl ether and 3,4-epoxyvinylcyclohexane.

Ingredient B can have a straight-chain, network, or three-dimensional molecular structure, and may be used in the form of their homopolymers or copolymers or as mixtures of two or more polymers. The degree of polymerization of this ingredient will correspond to a viscosity at 25° C. generally in the range of 0.5 to 50,000 centipoise and preferably in the range of 1 to 10,000 centipoise.

Ingredient B is preferably added in a quantity equivalent to values of 0.5:1 to 5:1 for the molar ratio between the silicon-bonded hydrogen atoms in this ingredient and the silicon-bonded alkenyl radicals in ingredient A. The concentration of ingredient B is typically within the range of from 0.1 to 20 weight parts per 100 weight parts of ingredient A.

Ingredient C is present when it is desired to increase the adhesion of cured materials prepared using the present compositions over what can be achieved using ingredient B alone. Ingredient C is an organohydrogenpolysiloxane containing in each molecule at least 1 alkoxysilylalkyl group and at least 3 silicon-bonded hydrogen atoms.

In order for the present compositions composition to exhibit adhesion, ingredient C must contain at least 1 alkoxysilylalkyl group in each molecule. The alkoxysilyl portion of this group is exemplified by trimethoxysilyl, triethoxysilyl, triisopropoxysilyl, and tributoxysilyl. These groups will be bonded to silicon through an alkylene group such as methylene, ethylene, propylene, and butylene.

It is essential that each molecule of ingredient C contain at least 3 silicon-bonded hydrogen atoms for the present compositions to form a network structure during curing.

Other than the aforementioned alkoxysilylalkyl group, the silicon-bonded organic groups in ingredient C are selected from the same group of hydrocarbon and halogenated hydrocarbon radicals represented by R in the average unit formula for ingredient A. These hydrocarbon radicals may all be the same within the molecule, or two or more types may be present.

Ingredient C is exemplified by the following compounds

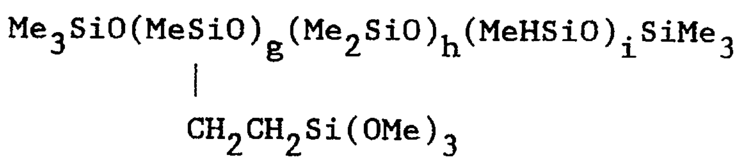

and

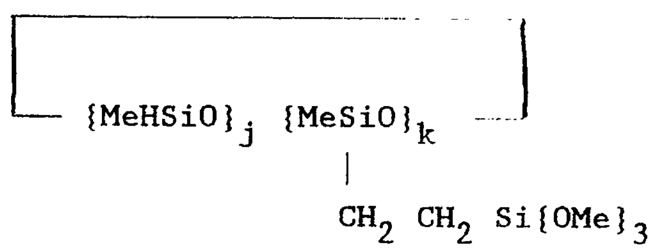

In these formulae g and h are integers with values of at least 1, i is an integer with a value of at least 3, j is an integer with a value of at least 3 and the sum of j and k is from 4 to 6, inclusive.

Ingredient C can be readily prepared, for example, by the partial addition, in the presence of a hydrosilylation-reaction catalyst, of an alkenyl-substituted alkoxysilane with at least a portion of the silicon-bonded hydrogen atoms of an methylhydrogenpolysiloxane. The latter are well known as curing agents for organosiloxane compositions which cure by the hydrosilylation reaction. Alkenyl-substituted alkoxysilanes are exemplified by but not limited to vinyltrialkoxysilanes, allyltrialkoxysilanes, and hexenyltrialkoxysilanes.

Ingredient C may have a straight-chain, network, or three-dimensional molecular structure, and can be an organosiloxane homopolymer or copolymer. Alternatively, ingredient C can be a mixture of two or more polymers. The degree of polymerization of this ingredient will correspond to a viscosity at 25° C. generally in the range of 0.5 to 50,000 centipoise and preferably in the range of 1 to 10,000 centipoise.

When ingredient C is present, its concentration is up to 20 weight parts per 100 weight parts of ingredient A, preferably from 0.1 to 10 weight parts per 100 weight parts of ingredient A.

Ingredient D is a hydrosilylation catalyst that is encapsulated within microparticles of a thermoplastic resin. The catalyst controls the reaction between the silicon-bonded alkenyl radicals in ingredient A and the silicon-bonded hydrogen atoms in ingredients B and C. The structure of the microparticulate thermoplastic resin can be one in which the hydrosilylation-reaction catalyst is present either as a core within a thermoplastic resin shell or skin, or the catalyst can be dissolved or dispersed throughout the thermoplastic resin particles.

The hydrosilylation-reaction catalyst itself can be any of the transition-metal catalysts known in the art to exhibit hydrosilylation catalytic activity. Specific examples include but are not limited to platinum-type catalysts such as chloroplatinic acid, alcohol-modified chloroplatinic acid, platinum/olefin complexes, chloroplatinic acid/olefin complexes, platinum/alkenylsiloxane complexes, chloroplatinic acid/alkenylsiloxane complexes, platinum black, and platinum supported on alumina, silica or carbon black; palladium catalysts such as tetrakis(triphenylphosphine)palladium, and rhodium catalysts. Chloroplatinic acid/divinylsiloxane complex catalysts are preferred hydrosilylation catalysts based on their high catalytic activity and compatibility with ingredients A and B.

Ingredient D comprises such a hydrosilylation-reaction catalyst contained within or present within microparticles of a thermoplastic resin with a softening point within the range of 50 to 200 °C. The thermoplastic resin used for this purpose may be any such resin as long as it is essentially impermeable to the hydrosilylation-reaction catalyst at least during storage and as long as it is essentially insoluble in the organopolysiloxane comprising ingredient A. Thermoplastic resins which can be used in ingredient D are exemplified by but not limited to silicone resins, polysilane resins, polystyrene resins, acrylic resins, and methylcellulose resins.

The hydrosilylation catalyst-containing microparticulate thermoplastic resin can be prepared by chemical methods such as interfacial polymerization and in-situ polymerization, by physical-chemical methods such as coacervation and in-liquid drying, and by physical-mechanical methods such as spray drying. Any of these methodologies may be used by the present invention; however, in-liquid drying and spray drying are preferred because these techniques afford microparticles with a narrow particle size distribution in a relatively simple and straightforward manner.

The hydrosilylation catalyst-containing microparticulate thermoplastic resin obtained by the foregoing methods can be directly used as a ingredient D. If it is desired to obtain a curable organosiloxane composition with a superior storage stability, it is preferred that the resin particles be washed with an appropriate washing solvent in order to remove hydrosilylation-reaction catalyst adhering to the surface of the particles. Suitable washing solvents should be capable of dissolving the hydrosilylation reaction catalyst without dissolving the thermoplastic resin. Examples of such washing solvents are alcohols such as methyl alcohol and ethyl alcohol and low-molecular-weight organopolysiloxanes such as hexamethyldisiloxane.

The average particle size of ingredient D should fall within the range of 0.01 to 100 micrometers, preferably within the range of 0.1 to 10 micrometers. When the average particle size falls below 0.01 micrometers, the yield of hydrosilylation-reaction catalyst from production suffers a drastic decline. When the average particle size exceeds 100 micrometers, the stability of the dispersion in the ingredient A is impaired.

Ingredient D should contain at least 0.01 weight percent of the hydrosilylation-reaction catalyst, calculated on the basis of the metal, typically platinum, present in the catalyst. At concentrations below 0.01 weight percent, the proportion of thermoplastic resin in the composition of the present invention becomes too large, and this impairs the properties of the cured materials prepared from the present compositions.

The concentration of Ingredient D is equivalent to from 0.000001 to 0.1 weight parts, preferably from 0.00005 to 0.01 weight, of platinum per 100 weight parts ingredient A. The concentration of ingredient D itself should be from 0.005 to 100 weights per 100 weight parts of ingredient A, it may be used in excess of this weight part range as long as said platinum-based weight part range is satisfied. In the case of a transition metal other than platinum, the number of moles of these metals can be substituted for moles of platinum in the concentration requirements.

The present compositions can be limited to the four ingredients identified as A through D. For some applications it may be desireable to add one or more of the following additional ingredients, so long as the objectives of the present compositions are not compromised: microparticulate silicas such as fumed silicas and wet-method silicas; reinforcing fillers such as surface-hydrophobicized microparticulate silicas; organopolysiloxanes having at least 2 silicon-bonded hydrogen atoms in each molecule, which are used for the purpose of adjusting the molar ratio between the silicon-bonded hydrogen atoms and the silicon-bonded alkenyl radicals of ingredient A; crepe-hardening inhibitors; storage stabilizers such as phenylbutynol; non-organopolysiloxane polymers; as well as heat stabilizers, flame retardants, powdered quartz, diatomaceous earth, calcium carbonate, glass fiber, and so forth.

The present compositions can be directly prepared by mixing the aforementioned ingredients A through D to homogeneity. The mixing sequence here is not particularly restricted, but a preferred method consists of mixing and dispersing ingredient D to homogeneity into a small quantity of ingredient A followed by the addition of this to the mixture of ingredients A, B, and C. Any means may be used here so long as it does not fracture or destroy the microparticles of hydrosilylation catalyst-containing thermoplastic resin. The temperature conditions in this phase cannot be unconditionally specified because they will vary with the type of resin used in ingredient D. At the very least the temperature must not exceed the softening point of the thermoplastic resin used in ingredient D.

The present compositions develop an excellent adhesion to a variety of substrates that they are in contact with during curing, in addition to exhibiting an excellent storage stability in the vicinity of room temperature. The compositions can be stored for long periods of time as a single-package organopolysiloxane composition.

Accordingly, the composition of the present invention is highly qualified for application as an adhesive and as a potting agent and coating for electrical and electronic components where the adhesion properties and extended storage life of the present compositions are critical requirements.

The present invention is explained in greater detail below through illustrative examples and reference examples. In these examples, parts and percentages are by weight, viscosities were measured at 25°C., and cp represents centipoise.

Reference Example 1

Preparation of a platinum/vinylsiloxane complex

160 Grams of 1,3-divinyltetramethyldisiloxane and 32.0 g chloroplatinic acid, $H_2PtCl_6 \cdot 6H_2O$, were mixed under a flow of nitrogen, first at room temperature and then while being heated at 120°C. for 1 hour. The platinum black produced as a by-product was then removed by filtration and the acid was removed by washing with water, yielding a reaction product containing a complex of platinum coordinated with 1,3-divinyltetramethyldisiloxane. The platinum metal concentration in this reaction product was 4.25%.

Reference Example 2

Preparation of platinum catalyst-containing silicone resin microparticulate catalyst

The following ingredients were introduced into a stirrer-equipped glass reactor and mixed to homogeneity: 300 g thermoplastic silicone resin exhibiting a softening point of 90°C. and composed of 18 mole% diphenylsiloxane units, 17 mole% dimethylsiloxane units, and 65 mole% monophenylsiloxane units; 150 g toluene; and 1,520 g methylene chloride. This was followed by the introduction into the reactor of 30 g of the platinum/vinylsiloxane complex composition described in Reference Example 1. The resulting mixture was blended to homogeneity to yield a homogeneous solution of the Pt/vinylsiloxane complex and thermoplastic silicone resin. Using a dual-flow nozzle and a stream of heated nitrogen, this solution was continuously sprayed into a spray dryer chamber supplied by Ashizawa Niro Atomizer K. K. The temperature of the nitrogen current was 95°C. at the inlet to the spray dryer, 45°C. at the outlet from the spray dryer and the flow rate of the gas was 1.3 $m^3$/minute. Operation of the spray drier for 1 hour produced 450 g of the microparticulate platinum/vinylsiloxane complex-containing silicone resin that was recovered using a bag filter. The microparticles had an average particle diameter of 1.0 micrometers, contained 0.5% of particles larger than 5 micrometers, and had a platinum content of 0.42%. Examination of the microparticles using scanning electron microscopy confirmed that the microparticles had a spherical morphology.

Reference Example 3

Preparation of a microparticulate platinum catalyst-containing silicone resin

The following ingredients were dissolved in 330 g methylene chloride: 1.6 g of the platinum/vinylsiloxane complex catalyst described in Reference Example 1 and 16.0 g thermoplastic silicone resin having a softening point of 90°C. and composed of 18 mole% diphenylsiloxane units, 17 mole% dimethylsiloxane units, and 65 mole% monophenylsiloxane units. This methylene chloride solution was added with stirring to water containing 15 g polyvinyl alcohol available as Gosenol GL-05 from Nippon

Gosei Kagaku Kogyo K. K. The methylene chloride was then evaporated off over a period of 48 hours at 25 to 40° C. and the solids were removed from the resultant suspension by centrifugal separation. These solids were then washed with water followed by a large quantity of methyl alcohol to yield a microparticulate platinum/vinylsiloxane complex-containing silicone resin containing 0.40% platinum and exhibiting an average particle diameter of 1 micrometer.

Reference Example 4

Preparation of microparticulate platinum-containing polystyrene resin

8.0 Grams polystyrene with a glass-transition temperature of 82° C. and 1.0 g of the platinum/vinylsiloxane complex catalyst described in Reference Example 1 were dissolved in 165 g methylene chloride. This methylene chloride solution was added with stirring to water containing 7.5 g polyvinyl alcohol available as Gosenol GL-05 from Nippon Gosei K.K. The methylene chloride was then evaporated off over 40 hours at 25 to 40° C. and the solids were removed from the resulting suspension by centrifugal separation. The solids were then washed with water, a large quantity of methyl alcohol, and finally with hexamethyldisiloxane to give a microparticulate platinum/vinylsiloxane complex-containing polystyrene resin with an average particle size of 7 micrometers and a platinum content of 0.24%.

Example 1

The following ingredients were mixed to homogeneity: 100 parts of a dimethylvinylsiloxy-terminated dimethyl-polysiloxane exhibiting a viscosity of approximately 2,000 cp (2 Pa•s) and 20 parts microparticulate silica exhibiting a specific surface area of approximately 200 $m^2/g$, whose surface had been hydrophobicized with hexamethyldisilazane. This was followed by the addition with mixing to homogeneity of 0.02 parts 3,5-dimethyl-3-hexynol and 1.49 parts of an organohydrogenpolysiloxane corresponding to ingredient B of the present compositions with the average molecular formula B1

(B1)

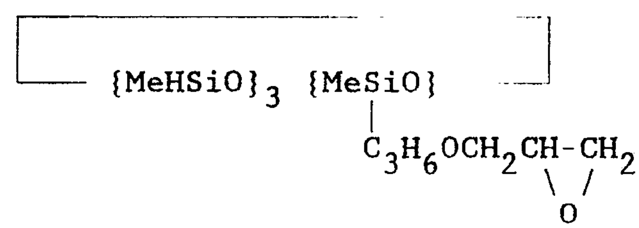

A thermosetting organopolysiloxane composition was then obtained by the addition with mixing of a quantity of the microparticulate platinum-containing silicone resin described in Reference Example 2 equivalent to a platinum content of 5 ppm in the final curable composition.

This composition was placed between pairs of identical panels formed from aluminum, iron, Bakelite(R), glass fiber reinforced epoxy resin, polybutylene terephthalate (PBT), or glass. The resultant composites were cured at 120° C. for 1 hour in an oven to yield a cured test sample in which the two panels were bonded into a single body through the cured product formed from the organopolysiloxane composition. The test samples were installed in a Tensilon(R) tensile tester and their adhesive strength measured in accordance with the tensile shear test described in ASTM test procedure D 1002-53T. These results of these measurements are reported in Table 1.

For comparison, a curable organosiloxane composition was prepared as described in the preceding section of this example, but replacing ingredient B1 with 0.87 parts of a methylhydrogenpolysiloxane B2

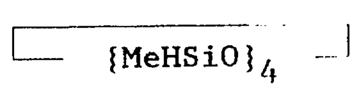

Cured test samples were prepared and tested as described in the preceding section of this example, and these results are also reported in Table 1 as Comparison Example 1.

Table 1

| substrate | Example 1 | Comparison Example 1 |
|---|---|---|
| | adhesive strength, kg/cm | |
| aluminum | 32 | ≤ 5 |
| iron | 35 | ≤ 5 |
| Bakelite | 31 | ≤ 5 |
| epoxy/glass | 33 | ≤ 5 |
| PBT | 18 | ≤ 5 |
| glass | 30 | ≤ 5 |

A thermosetting organopolysiloxane composition was also prepared as described in the preceding section of this example using as the hydrosilylation catalyst an amount of the platinum/ vinylsiloxane complex described in Reference Example 1 equivalent to a platinum content of 5 ppm, based on the weight of the final curable composition in place of the microparticulate platinum containing thermoplastic resin of the present compositions. When the storage stability of this composition was evaluated, it was found that this composition was cured after standing for 10 days at 25°C. In contrast to this, the composition referred to as Example 1 in Table 1 was not cured even after standing for 100 days at 25°C.

Example 2

The following ingredients were thoroughly mixed: 58 parts of a dimethylvinylsiloxy-terminated dimethylpolysiloxane with a viscosity of approximately 2,700 cp (2.7 Pa•s); 13 parts of an organopolysiloxane exhibiting a viscosity of approximately 10 cp (0.01 Pa•s) and composed of trimethylsiloxy groups, dimethylvinylsiloxy groups, and $SiO_2$ units; 17 parts of powdered quartz with an average particle size of approximately 5 microns; and 12 parts microparticulate silica exhibiting a specific surface area of approximately 200 $m^2/g$ which had been surface-hydrophobicized with hexamethyldisilazane. To the resultant mixture were added with mixing to homogeneity 2.4 parts of an organohydrogenpolysiloxane corresponding to ingredient B of the present compositions and represented by average formula B3

(B3) 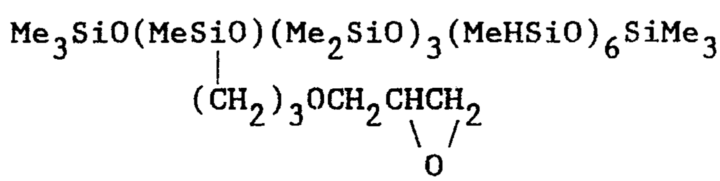

2.3 parts of an organohydrogenpolysiloxane as corresponding to ingredient C of the present compositions and represented by average formula C1.

(C1) 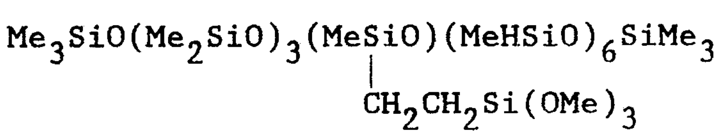 ,

0.24 parts of the microparticulate platinum-containing silicone resin prepared as described in Reference Example 2, and 0.03 parts 3-phenyl-3-butynol. This composition was placed between two aluminum test

panels and a test specimen prepared as described in Example 1. The adhesion and type of failure were evaluated by adhesion testing as described in Example 1. The initial adhesive strength was 37 kg/cm, the adhesive strength after 60 days at 40° C. was 35 kg/cm, and in each case the bonding failure corresponded to cohesive failure.

Example 3

A curable organosiloxane composition was prepared as described in Example 2, but in this case using the microparticulate platinum-containing silicone resin described in Reference Example 3 in place of the microparticulate encapsulated catalyst described in Reference Example 2. This composition was subjected to adhesion testing as in Example 2 using panels of copper, nickel, brass, Bakelite, and glass fiber reinforced epoxy resin in order to evaluate the adhesive strength of type of bonding failure.

For comparison, a thermosetting organopolysiloxane composition was prepared as described in the preceding section of this example, but in this case adding as the curing agent 5.1 parts of an organohydrogenpolysiloxane of the formula

$Me_3SiO(Me_2SiO)_3(MeHSiO)_7SiMe_3$

and as the adhesion promoter 1.0 parts vinyltrimethoxysilane, and 0.7 parts allyl glycidyl ether in place of the ingredients B and C of the present invention. Test samples prepared and tested as described in Example 1 and the type of bonding failure is reported in Table 2 as Comparison Example 2.

Table 2

| Substrate | Example 3 | Comparison Example 2 |
|---|---|---|
| copper | + | - |
| nickel | + | - |
| brass | + | - |
| Bakelite | + | + |
| epoxy/glass | + | - |

\+ cohesive failure - at least 95% cohesive failure resulting from fracture in the cured layer formed from the organosiloxane composition

\- interfacial failure - failure at the interface between the substrate and the cured layer formed from the organopolysiloxane composition

The storage stabilities of the compositions identified as example 3 and comparison example 2 with the following results: the composition of Example 3 was not cured even after standing 60 days at 40° C., while the composition of Comparison Example 2 was cured after standing 5 days at 40° C.

Example 4

The following ingredients were mixed to homogeneity: 100 parts of a dimethylvinylsiloxy-terminated dimethylpolysiloxane with a viscosity of approximately 2,000 centipoise (2 Pa•s) and 20 parts of a

microparticulate silica exhibiting a specific surface area of approximately 200 $m^2/g$ whose surface had been hydrophobicized by treatment with hexamethyldisilazane. A thermosetting organosiloxane composition of this invention was prepared by the addition to the resultant mixture of 4.0 parts of an organohydrogenpolysiloxane corresponding to ingredient B of the present compositions and represented by average formula B4

(B4)

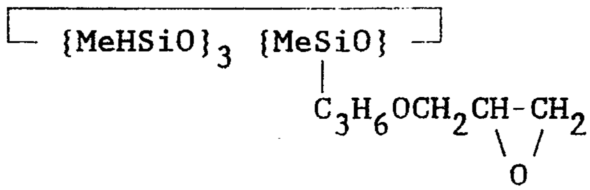

3.1 parts of an organohydrogenpolysiloxane corresponding to ingredient C of the present compositions and represented by average molecular formula C2

(C2)

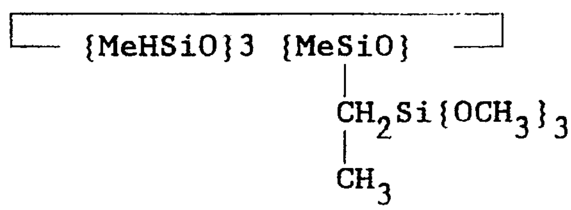

and 0.2 parts of a microparticulate platinum-containing polystyrene resin described in Reference Example 4. Approximately 10 g of the resultant curable composition of this invention was placed in an aluminum cup having a diameter of 6 cm and cured for 30 minutes in an oven maintained at 150° C., and the bonding status was then evaluated. The cured material deriving from this composition was strongly bonded to the aluminum cup. When forcibly peeled, cohesive failure was observed in which fracture occurred within the cured material. When the storage stability of the curable composition was investigated, it was found that this composition was not cured even after standing for 90 days at 25° C.

## Claims

1. In a curable organosiloxane composition comprising
(A) 100 weight parts organopolysiloxane containing at least two silicon-bonded alkenyl radicals in each molecule, and represented by the average unit formula

$R_aSiO_{(4-a)/2}$

where R represents a monovalent hydrocarbon or halogenated hydrocarbon radical, and the value of a is from 1.0 to 2.3,
(B) at least one organohydrogenpolysiloxane containing at least three silicon-bonded hydrogen atoms per molecule in an amount sufficient to cure said composition, and
(C) from 0.005 to 100 weight parts of a microparticulate thermoplastic resin containing at least 0.01 weight % of a hydrosilylation catalyst, where the thermoplastic resin exhibits a softening point of 50 to 200° C., and the average particle size of said resin is from 0.01 to 100 micrometers,
the improvement comprising the presence in said composition of from 0.1 to 20 weight parts of a first organohydrogenpolysiloxane containing at least 1 epoxy substituted organic radical and the presence of from 0 to 20 weight parts of a second organohydrogen-polysiloxane containing at least 1 silicon-bonded alkoxysilylalkyl group.